# FASCICULE DE BREVET EUROPEEN

(11) **EP 2 178 755 B1**
(45) Date de publication et mention de la délivrance du brevet: **05.12.2012**
(21) Numéro de dépôt: 08827805.6
(22) Date de dépôt: 20.06.2008
(51) Int. Cl.: B64D 29/08, B64D 29/06, B64D 33/04

(54) **SYSTEME DE LIAISON ENTRE UNE STRUCTURE INTERNE ET UNE STRUCTURE EXTERNE D'UNE NACELLE DE TURBOREACTEUR**
KUPPLUNGSSYSTEM ZUR VERBINDUNG DER INTERNEN STRUKTUR MIT DER ÄUSSEREN STRUKTUR EINER TRIEBSWERKSGONDEL
COUPLING SYSTEM CONNECTING AN INTERNAL STRUCTURE AND AN EXTERNAL STRUCTURE OF A JET ENGINE NACELLE

(30) Priorité: 20.08.2007 FR 0705890
(43) Date de publication de la demande: 28.04.2010
(73) Titulaire: Aircelle, 76700 Gonfreville l'Orcher (FR)
(72) Inventeur: BOUILLON, Florent, F-76280 Anglesqueville (FR); DUNLEAVY, Pat, F-91120 Palaiseau (FR)
(74) Mandataire: Jouanneau, Lionel
(86) Numéro de dépôt international: PCT/FR2008/000864
(87) Numéro de publication internationale: WO 2009/024662

(56) Documents cités:
- EP-A- 0 845 581
- FR-A- 2 896 481
- US-A- 4 044 973
- US-A1- 2006 038 065

## Description

La présente invention se rapporte à une nacelle de turboréacteur destinée à être rattachée à une structure d'un avion par un mât de liaison. Une telle nacelle est connue de FR 2896481 A1, qui est considéré comme l'art antérieur le plus proche et décrit les caractéristiques du préambule de la revendication 1.

Un avion est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval intégrant éventuellement des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Afin de pouvoir facilement réaliser des opérations de maintenance à l'intérieur de la nacelle, la section arrière se présente généralement sous la forme de deux demi-parties montées sur le mât au moyen de charnières permettant leur ouverture radiale autour d'un axe longitudinal situé au voisinage du mât. Une telle structure est appelée « C-Duct ». Les demi-parties sont liées entre elles en partie inférieure par des verrous.

Afin de simplifier l'ouverture de ladite section arrière, la structure externe et la structure interne sont mécaniquement liées et solidarisées au sein de la même demi-partie. Ainsi, l'ouverture des demi-parties permet un accès direct au turboréacteur et il n'est pas nécessaire d'ouvrir la structure externe puis la structure interne.

La liaison entre la structure interne et la structure externe s'effectue par l'intermédiaire de prolongements radiaux de la structure interne s'étendant selon des directions radiales à travers la veine jusqu'à une paroi intérieure de la structure externe. Ces prolongements se situent généralement à six heures et à douze heures, c'est-à-dire respectivement à proximité de la ligne de verrouillage entre les deux demi-parties et des lignes charnières au niveau du mât.

La solidarisation entre la structure externe et la structure interne s'effectue par le boulonnage d'un raidisseur présentant une forme en équerre et fixé à la fois sur un prolongement de la structure interne et sur une extrémité du panneau intérieur de la structure externe.

Un carénage lisse est fixé entre les mêmes parois du côté de la veine de circulation du flux afin d'assurer une bonne continuité aérodynamique intérieure.

En vol, les éléments de la nacelle sont soumis à diverses contraintes et efforts. La structure interne et le panneau intérieur de la structure externe sont notamment soumis à des efforts de pression importants qui induisent des efforts de traction et des moments de rotation s'exerçant sur le raidisseur.

Les conséquences principales en sont une tendance à la rotation des poutres de liaisons ainsi qu'un déplacement radial de la bride couteau assurant le maintien de la section arrière avec la section médiane.

Il s'ensuit également que le raidisseur doit être solidement fixé dans la structure interne et le panneau intérieur de la structure externe. Ceux-ci étant généralement constitués à partir de panneaux acoustiques, il est nécessaire d'introduire des ruptures dans ces panneaux, le boulonnage ne pouvant traverser une surface acoustique. Cela entraîne une diminution de la surface acoustique effective.

Une autre conséquence, est également le surdimensionnement des charnières et des verrous assurant le maintien de la structure externe en vol.

Par conséquent, il existe un besoin pour un système de fixation et de maintien plus efficace permettant de mieux supporter les efforts s'exerçant sur les structures externe et interne.

La présente invention a ainsi notamment pour but de fournir une nacelle possédant une fixation améliorée entre la structure interne et la structure externe de la section arrière et se rapporte pour se faire à une nacelle pour turboréacteur double flux destinée à être rattachée à une structure d'un avion par un mât de liaison et comprenant une section avant d'entrée d'air, une section médiane destinée à entourer une soufflante de turboréacteur et une section arrière présentant une structure interne destinée à servir de carter à une partie arrière du turborécteur et définissant avec une structure externe une veine d'écoulement d'un flux secondaire, la structure interne présentant des prolongements sensiblement radiaux traversant la veine et par lesquels elle est liée à un panneau intérieur de la structure externe au moyen d'au moins un raidisseur correspondant possédant une forme sensiblement en équerre, caractérisée en ce que le raidisseur est également fixé dans un panneau externe de la structure externe.

Ainsi, la liaison du raidisseur avec non seulement le panneau interne de la structure externe mais également le panneau externe de cette dernière, permet un meilleur équilibre des efforts afin d'éviter les rotations des poutres. En effet, la fixation sur le panneau externe de la structure externe permet que les efforts de déformation s'exerçant sur cette dernière soit également transmis au raidisseur et génère des moments de rotation qui viennent, au moins en partie, s'opposer aux moments de rotation tendant à entraîner les poutres.

Ceci permet, entre autres avantages, une jonction monolithique au lieu d'une jonction sandwich qui requérait des ruptures dans les panneaux acoustiques ; mais également une réduction de l'importance du déplacement de la bride couteau et de résoudre une partie des problèmes de désengagement de ladite bride.

Préférentiellement, au moins un raidisseur situé au niveau d'un moyen de fixation de la nacelle à une poutre du mât.

De manière préférentielle, la section arrière se décompose en au moins deux demi-parties sensiblement hémicylingriques de part et d'autres d'un plan sensiblement vertical de la nacelle.

Avantageusement, les moyens d'attache de la section arrière au mât sont démontables.

Avantageusement encore, les moyens d'attache de la section arrière au mât sont des charnières.

De manière préférentielle, la nacelle comprend des moyens de verrouillage des demi-parties le long d'une ligne longitudinale inférieure de la nacelle.

Avantageusement, elle comprend des raidisseurs pour chaque demi-partie, situés sensiblement au niveau d'au moins un moyen de verrouillage.

Préférentiellement, la structure interne est réalisée à partir d'un panneau acoustique.

Préférentiellement encore, le panneau interne de la structure externe est réalisé à partir d'un panneau acoustique.

D'autres caractéristiques et avantages de la présente invention apparaîtront à la lumière de la description qui va suivre et à l'examen des figures annexées dans lesquelles :
- la figure 1 est une représentation schématique en perspective avant d'une section arrière d'une nacelle de turboréacteur.
- la figure 2 est une représentation schématique d'une demi-partie de la section arrière montrée à la figure 1.
- la figure 3 est une vue partielle agrandie d'une demi-partie de la section arrière comprenant une liaison entre structure interne et structure externe selon l'art antérieur prise au niveau d'un verrou inférieur.
- la figure 4 est une représentation schématique d'une liaison entre structure interne et structure externe selon l'invention prise au niveau d'une charnière ou verrou supérieur.
- les figures 5 à 10 sont des représentations de différents modes de réalisation de la fixation de la figure 4 en fonction du positionnement des verrous le long de la section arrière.

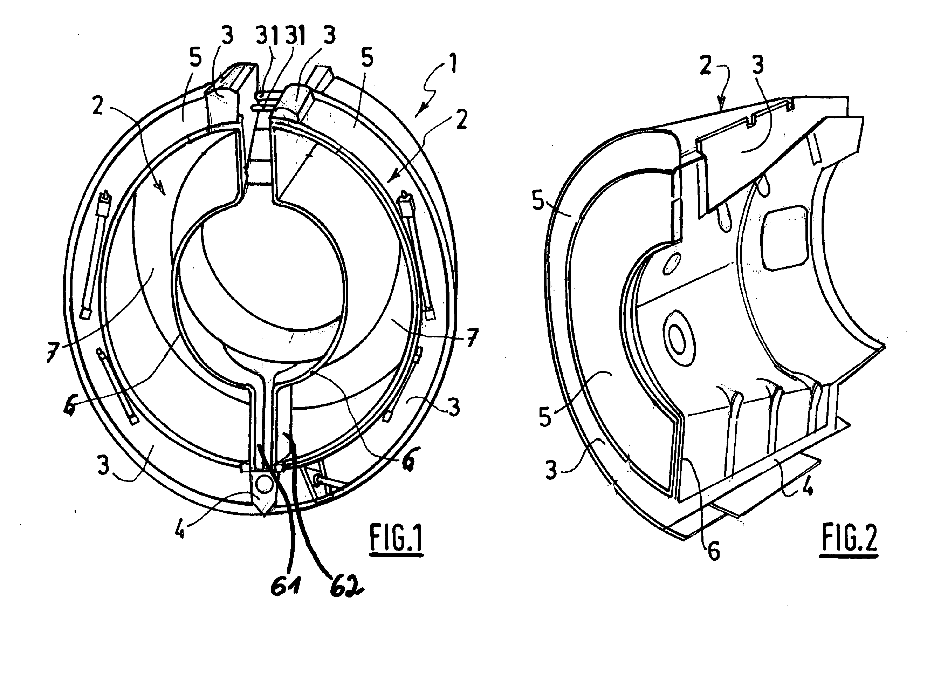

La figure 1 montre une section arrière 1 destinée à équiper une nacelle pour turboréacteur double flux.

La section arrière 1 est réalisée sous la forme de deux demi-parties 2 sensiblement hémicylindriques destinées à être fixées autour du turboréacteur de part et d'autre d'un mât (non représenté).

Chaque demi partie 2 comprend une poutre longitudinale supérieure 3 et une poutre longitudinale inférieure 4 servant ensemble d'armature à une structure externe 5 destinée à assurer la continuité aérodynamique extérieure de la nacelle et une structure interne 6 destinée à entourer une partie arrière du turboréacteur. La structure externe 5 et la structure interne 6 délimitent ensemble une veine 7 d'écoulement du flux froid.

Plus précisément, la veine 7 d'écoulement est délimitée par la structure interne 6, d'une part, et par une paroi intérieure 51 de la structure externe 5. La structure externe 5 présente également une paroi externe 52 destinée quant à elle à assurer la continuité aérodynamique externe.

La paroi interne 51 et la paroi externe 52 se rejoignent en aval de la section arrière pour former une tuyère d'extrémité et délimitent ensemble un espace intérieur (non référencé) généralement destiné à loger des équipements annexes de la nacelle.

La structure interne 6 est liée au reste de la demi-partie 2 correspondante par l'intermédiaire d'un prolongement radial supérieur 61 et d'un prolongement radial inférieur 62 s'étendant jusqu'à la paroi interne 51 de la structure externe à laquelle elle est fixée.

Chaque poutre longitudinale supérieure 3 présente des moyens de liaison 31 au mât uniformément répartis le long de ladite poutre 3. Classiquement, dans le cas de demi-parties 2 ouvrables, les moyens de liaison se présenteront sous la forme d'oeillets aptes à former une charnière avec un tenon correspondant du mât.

Chaque poutre longitudinale inférieure 4 présente des moyens d'attache aptes à coopérer avec des moyens d'attache complémentaires de la poutre longitudinale inférieure 4 correspondante de l'autre demi-partie. Il s'agira typiquement de verrous.

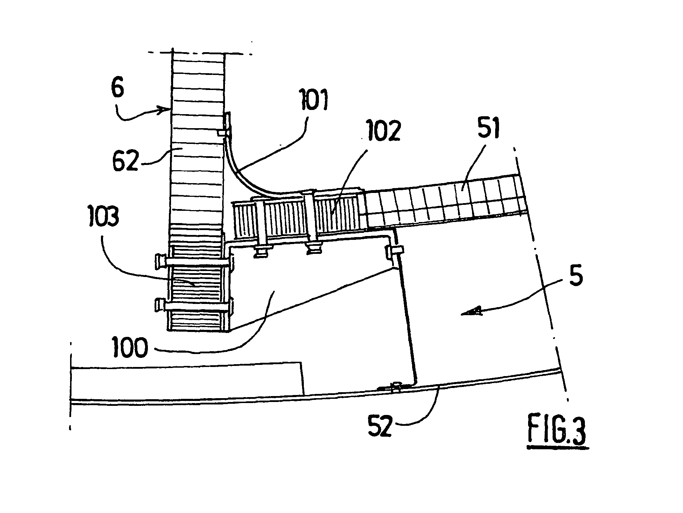

La figure 3 montre schématiquement la manière dont la structure interne 6 est liée à la structure externe 5 selon l'art antérieur.

La structure interne 6 est liée avec la structure externe 5 au moyen d'un ou plusieurs raidisseurs 100 répartis le long de la section arrière 1, chaque raidisseur 100 présentant sensiblement une forme en équerre dont un côté est fixé, par boulonnage par exemple, dans la paroi interne 51 de la structure externe 5 et dont un deuxième côté est fixé, également par boulonnage, dans le prolongement radial inférieur 62.

La liaison est complétée par un carénage lisse 101 également fixé à la fois sur le prolongement radial inférieur 62 et sur la paroi interne 52 de la structure externe 5.

Il convient de noter, comme mentionné précédemment, que la structure interne 6, y compris, les prolongements radiaux inférieur 62 et supérieur 61, ainsi que la paroi interne 51 de la structure externe 5 sont réalisés à partir de panneaux acoustiques. Il s'ensuit que la fixation des raidisseurs 100 ne peut être effectuée directement dans ces panneaux acoustiques, ce qui conduit à introduire des ruptures de matériaux afin de prévoir des zones 102, 103 réalisées dans un matériau dont la structure permet une telle fixation.

Le même principe de liaison s'applique mutatis mutandis pour le prolongement radial supérieur 61.

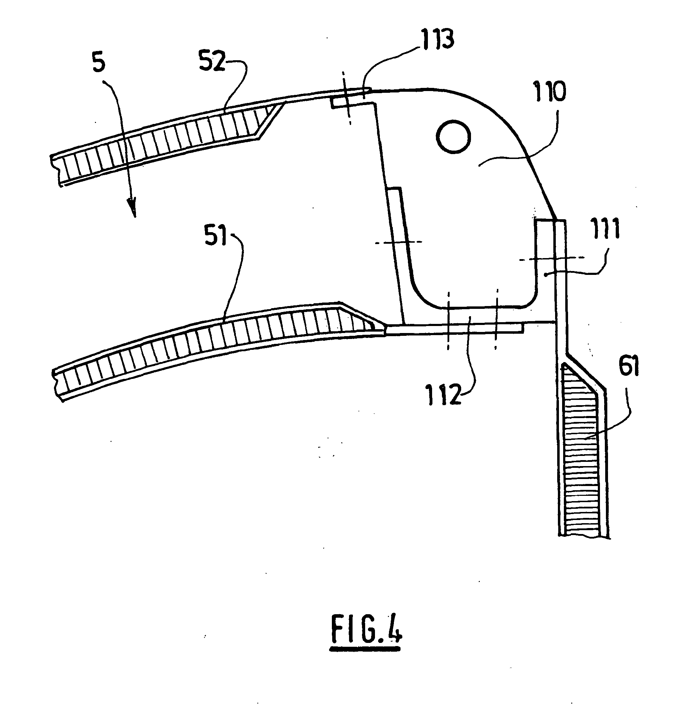

La figure 4 est une représentation du principe de l'invention.

Selon l'invention, la liaison entre la structure interne 6 et la structure externe 5 s'effectue par le biais de raidisseurs 110.

Chaque raidisseur 110 présente classiquement un premier rebord 111 destiné à être fixé dans un prolongement radial 61, 62 de la structure interne 6 et un deuxième rebord 112, formant sensiblement un angle droit avec le premier rebord 111, destiné à être fixé dans le panneau interne 52 de la structure externe 5.

Le raidisseur 110 se différencie d'un raidisseur 100 par le fait qu'il comprend également un prolongement ou un bras 113 apte à être fixé dans la paroi externe 51 de la structure externe 5.

On constatera que les efforts étant réduits, il n'est plus nécessaire de prévoir une rupture dans les panneaux acoustiques de manière à y intégrer une zone réalisée dans un matériau apte à supporter le boulonnage. Comme montré sur la figure 4, chaque panneau présente une extrémité fine recevant directement le raidisseur 110.

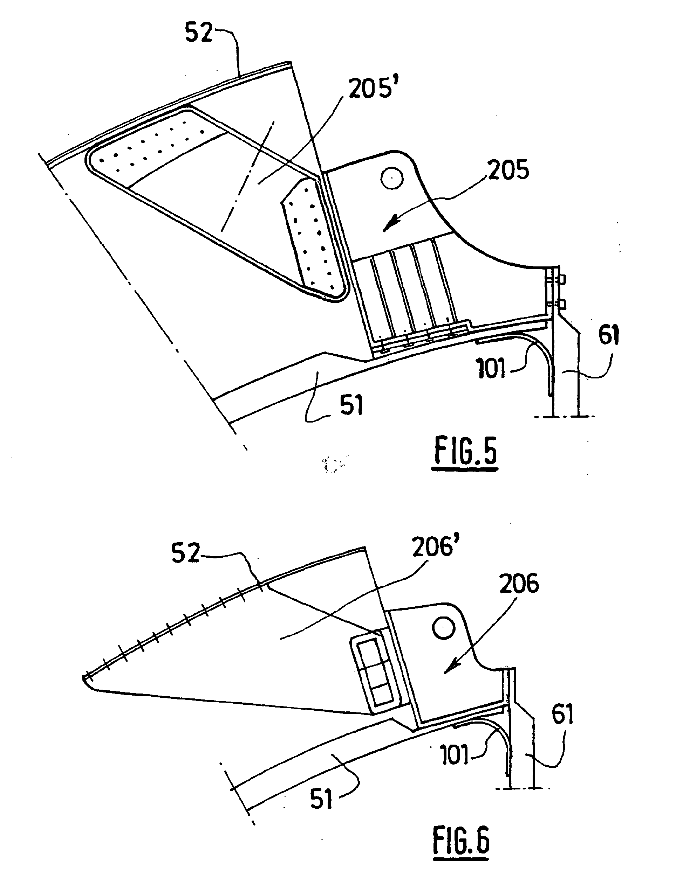

Des exemples de réalisation de l'invention sont montrés sur les figures 6 à 11 pour des raidisseurs disposés à différents endroits le long de la section arrière 1.

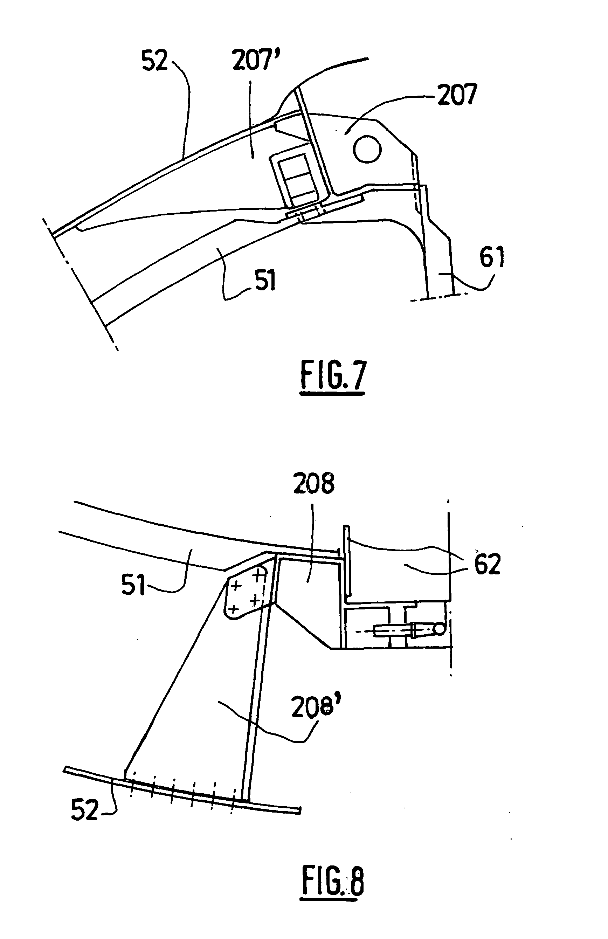

Les figures 5 à 7 montrent l'invention appliquée au niveau d'une poutre longitudinale supérieure 3 tandis que les figures 8 à 10 montrent l'invention appliquée au niveau d'une poutre longitudinale inférieure 4.

La figure 5 montre un raidisseur 205 destiné à être situé au niveau de la première charnière, c'est-à-dire la charnière la plus en amont sur la section arrière 1, emplacement supportant les déformations les plus importantes et où la distance entre la paroi interne 512 et la paroi externe 52 est la plus importante. Le raidisseur 205 est donc équipé d'un bras renforcé 205' lié à la paroi externe 51.

La figure 6 montre un raidisseur 206 destiné à être situé au niveau de la deuxième charnière, c'est-à-dire une charnière plus en aval par rapport à la première charnière, emplacement supportant encore des déformations importantes, la distance entre la paroi interne 51 et la paroi externe 52 étant toutefois plus faible. Le raidisseur 206 est équipé d'un bras 206' lié à la paroi externe 51.

La figure 7 montre un raidisseur 207 destiné à être situé au niveau de la troisième charnière, c'est-à-dire l'avant dernière charnière. Le raidisseur 207 est équipé d'un bras 207' lié à la paroi externe 51.

Bien évidemment, la longueur sur laquelle le bras du raidisseur est fixé dans la paroi externe 51 est adaptée en fonction du matériau dans lequel est réalisé ledit bras et le raidisseur, ainsi qu'en fonction des efforts devant être repris à l'emplacement considéré.

La figure 8 montre un raidisseur 208 destiné à être situé au niveau du premier verrou inférieur, c'est-à-dire le verrou le plus en amont. Le raidisseur 208 est équipé d'un bras 208' lié à la paroi externe 51.

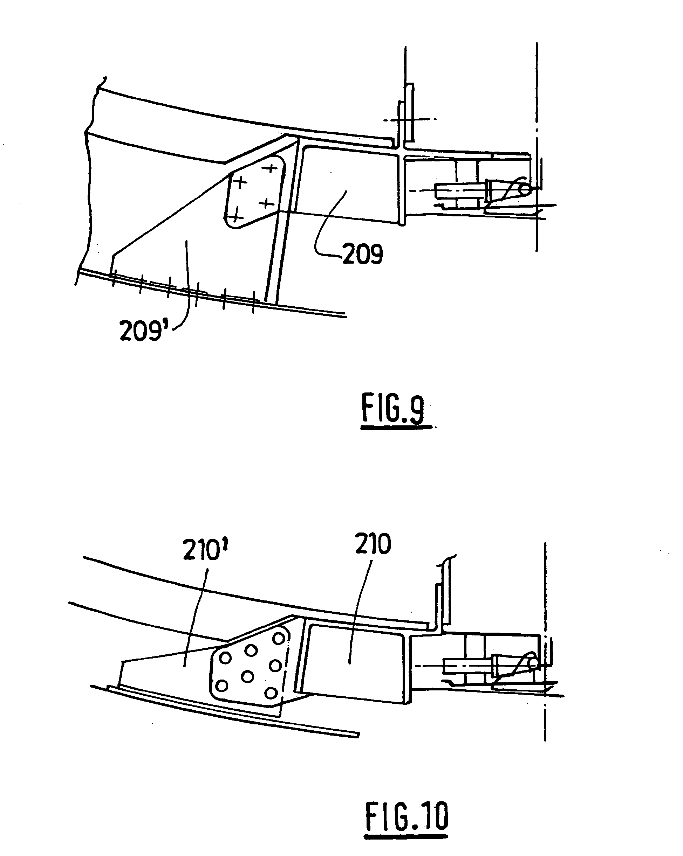

La figure 9 montre un raidisseur 209 destiné à être situé au niveau du premier verrou inférieur, c'est-à-dire le verrou le plus en amont. Le raidisseur 208 est équipé d'un bras 208' lié à la paroi externe 51.

Bien entendu, la présente invention n'est nullement limitée aux modes de réalisation décrits et représentés, fournis à titre de simples exemples illustratifs.

## Revendications

1. Nacelle pour turboréacteur double flux destinée à être rattachée à une structure d'un avion par un mât de liaison et comprenant une section avant d'entrée d'air, une section médiane destinée à entourer une soufflante de turboréacteur et une section arrière (1) présentant une structure interne (6) destinée à servir de carter à une partie arrière du turborécteur et définissant avec une structure externe (5) une veine (7) d'écoulement d'un flux secondaire, la structure interne présentant des prolongements (61, 62) sensiblement radiaux traversant la veine et par lesquels elle est liée à un panneau intérieur (51) de la structure externe au moyen d'au moins un raidisseur (110, 205 à 210) correspondant possédant une forme sensiblement en équerre, **caractérisée en ce que** le raidisseur est également fixé dans un panneau externe (52) de la structure externe.

2. Nacelle selon la revendication 1, **caractérisé en ce qu'**elle comprend au moins un raidisseur (110, 205 à 207) situé au niveau d'un moyen de fixation (31) de la nacelle à une poutre (3) du mât.

3. Nacelle selon l'une quelconque des revendications 1 ou 2, **caractérisée en ce que** la section arrière (1) se décompose en au moins deux demi-parties (2) sensiblement hémicylingriques de part et d'autres d'un plan sensiblement vertical de la nacelle.

4. Nacelle selon la revendication 3, **caractérisée en ce que** les moyens d'attache (31) de la section arrière au mât sont démontables.

5. Nacelle selon la revendication 3, **caractérisée en ce que** les moyens d'attache (31) de la section arrière (1) au mât sont des charnières.

6. Nacelle selon l'une quelconque des revendication 3 à 5, **caractérisée en ce qu'**elle comprend des moyens de verrouillage des demi-parties (2) le long d'une ligne longitudinale inférieure de la nacelle.

7. Nacelle selon la revendication 6, **caractérisée en ce qu'**elle comprend des raidisseurs (208 à 210) pour chaque demi-partie (2), situés sensiblement au niveau d'au moins un moyen de verrouillage.

8. Nacelle selon l'une quelconque des revendications 1 à 7, **caractérisée en ce que** la structure interne (6) est réalisée à partir d'un panneau acoustique.

9. Nacelle selon l'une quelconque des revendications 1 à 8, **caractérisée en ce que** le panneau interne (51) de la structure externe (5) est réalisé à partir d'un panneau acoustique.

## Claims

1. A nacelle for turbofan jet engine intended to be secured to a structure of an aircraft via a connecting pylon and comprising an air intake front section, a median section intended to surround a fan of the turbojet engine and an aft section (1) having an internal structure (6) intended to act as casing for an aft part of the turbojet engine and defining with an external structure (5) a fan airflow (7), the internal structure having substantially radial extensions (61, 62) passing through the airflow and via which it is joined to an internal panel (51) of the external structure by means of at least one corresponding stiffener (110, 205 to 210) substantially of bracket shape, **characterized in that** the stiffener is also secured in an external panel (52) of the external structure.

2. The nacelle according to claim 1, **characterized in that** it comprises ant least one stiffener (110, 205 to 207) located at securing means (31) of the nacelle to a beam (3) of the pylon.

3. The nacelle according to any of claims 1 or 2, **characterized in that** the aft section (1) is composed of at least two substantially semi-cylindrical semi-parts (2) either side of a substantially vertical plane of the nacelle.

4. The nacelle according to claim 3, **characterized in that** the securing means (31) of the aft section to the pylon are dismountable.

5. The nacelle according to claim 3, **characterized in that** the securing means (31) of the aft section (1) to the pylon are hinges.

6. The nacelle according to any of claim 3 to 5, **characterized in that** it comprises locking means of the semi-parts (2) along a lower longitudinal line of the nacelle.

7. The nacelle according to claim 6, **characterized in that** it comprises stiffeners (208 to 201) for each semi-part (2) that are located substantially at least at one locking means.

8. The nacelle according to any of claims 1 to 7, **characterized in that** the internal structure (6) is made from a sound absorption panel.

9. The nacelle according to any of claims 1 to 8, **characterized in that** the internal panel (51) of the external structure (5) is made from a sound absorption panel.

## Patentansprüche

1. Gondel für Turbofantriebwerk, die dazu bestimmt ist, anhand eines Verbindungsmasts an einer Struktur eines Flugzeugs befestigt zu sein und einen vorderen Lufteintrittssektor, einen mittleren Sektor, der dazu bestimmt ist, ein Turbotriebwerkgebläse zu umschließen, und einen hinteren Sektor (1) umfasst, der eine innere Struktur (6) aufweist, die dazu bestimmt ist, für einen hinteren Abschnitt des Turbotriebwerks als Gehäuse zu dienen und mit einer äußeren Struktur (5) einen Strömungskanal (7) einer sekundären Strömung definiert, wobei die innere Struktur etwa radiale Verlängerungen (61, 62) aufweist, die den Kanal durchqueren und über die sie mit einer inneren Platte (51) der äußeren Struktur anhand mindestens einer entsprechenden Verstärkung (110, 205 bis 210) verbunden ist, die eine etwa winkelförmige Form hat, **dadurch gekennzeichnet, dass** die Verstärkung ebenfalls in einer äußeren Platte (52) der äußeren Struktur befestigt ist.

2. Gondel nach Anspruch 1, **dadurch gekennzeichnet, dass** sie mindestens eine Verstärkung (110, 205 bis 207) umfasst, die sich auf Ebene eines Befestigungsmittels (31) der Gondel an einem Balken (3) des Masts befindet.

3. Gondel nach einem der Ansprüche 1 oder 2, **dadurch gekennzeichnet, dass** der hintere Sektor (1) aus mindestens zwei etwa halbzylindrischen Halbschalen (2) auf der einen und der anderen Seite einer etwa vertikalen Ebene der Gondel besteht.

4. Gondel nach Anspruch 3, **dadurch gekennzeichnet, dass** die Befestigungsmittel (31) des hinteren Sektors am Mast demontierbar sind.

5. Gondel nach Anspruch 3, **dadurch gekennzeichnet, dass** die Befestigungsmittel (31) des hinteren Sektors (1) am Mast Scharniere sind.

6. Gondel nach einem der Ansprüche 3 bis 5, **dadurch gekennzeichnet, dass** sie Verriegelungsmittel der Halbschalen (2) entlang einer Längslinie unter der Gondel umfasst.

7. Gondel nach Anspruch 6, **dadurch gekennzeichnet, dass** sie Verstärkungen (208 bis 210) für jede Halbschale (2) umfasst, die sich etwa auf Ebene mindestens eines Verriegelungsmittels befinden.

8. Gondel nach einem der Ansprüche 1 bis 7, **dadurch gekennzeichnet, dass** die innere Struktur (6) aus einer Akustikplatte hergestellt ist.

9. Gondel nach einem der Ansprüche 1 bis 8, **dadurch gekennzeichnet, dass** die innere Platte (51) der äußeren Struktur (5) aus einer Akustikplatte hergestellt ist.
